# EUROPÄISCHE PATENTANMELDUNG

(11) **EP 4 112 275 A1**
(43) Veröffentlichungstag der Anmeldung: **04.01.2023**
(21) Anmeldenummer: 22176141.4
(22) Anmeldetag: 30.05.2022
(51) Int. Cl.: B29C 64/118, B33Y 80/00, B33Y 10/00, B29C 70/38, B29C 45/00, B29C 45/14, B29B 11/16, B29C 70/88

(54) **STRUKTURBAUTEIL MIT ADDITIV GEFERTIGTEM ENDLOSFASEREINLEGER UND VERFAHREN ZU DESSEN HERSTELLUNG**

(30) Priorität: 01.07.2021 DE 102021116968
(71) Anmelder: Acad Group GmbH, 91560 Heilsbronn (DE)
(72) Erfinder: Kalusche, Alexander, 91126 Schwabach (DE); Kemnitzer, Jan, 95183 Feilitzsch/Zedtwitz (DE); Schorzmann, Johann, 95490 Mistelgau (DE); Pezold, Daniel, 95517 Emtmannsberg (DE)
(74) Vertreter: advotec.

(57) **Zusammenfassung**

Die Erfindung betrifft ein Verfahren zur Herstellung eines endlosfaserverstärkten Strukturbauteils (01) umfassend zumindest die folgenden Schritte:
a) Additives Fertigen eines faserverstärkten Einlegers (02) aus Matrix (03) und zumindest einer die Matrix (03) verstärkenden Endlosfaser (04);
b) Positionieren des Einlegers (02) in einer Kavität eines Werkzeugs (03); und
c) Einbringen einer fließfähigen Schmelze (04) in die Kavität des Werkzeugs (03) zur Ausbildung eines Grundkörpers (05) des Strukturbauteils (01), wobei der Einleger (02) beim Einbringen der Schmelze in das Werkzeug (03) verdichtet wird.

## Beschreibung

Die Erfindung betrifft ein Verfahren zur Herstellung eines endlosfaserverstärkten Strukturbauteils gemäß dem Oberbegriff des Anspruchs 1. Zudem betrifft die Erfindung ein Strukturbauteil.

Es ist grundsätzlich bekannt, dass für die Reduktion von Bauraum und Gewicht Strukturbauteile als Verbundbauteile mit unterschiedlichen Materialkombinationen ausgebildet werden können. Erfahrungsgemäß bieten auf Kunststoffen basierende Verbundbauteile eine Vielzahl an Vorteilen. Denn insbesondere mit faserverstärkten Kunststoffbauteilen kann gegenüber Bauteilen aus Metall Gewicht eingespart werden, bei gleichzeitiger Gewährleistung einer hohen Festigkeit. Auch das Umspritzen metallischer Einleger im Kunststoffspritzguss führt zu belastbaren Verbundbauteilen. Jedoch bieten metallische Einleger nur in begrenztem Maße eine lastgerechte Verstärkung der Bauteile bei gleichzeitiger Gewichtseinsparung, so dass hier Optimierungsbedarf besteht. Die Verstärkung von Spritzgussbauteilen durch Kurz- oder Langfaserverstärkungen zur Verbesserung der mechanischen Eigenschaften bietet zwar die Möglichkeit, das gesamte Bauteil mechanisch zu verstärken, jedoch keine Möglichkeit einer gerichteten Verstärkung des Bauteils in besonders belasteten Bereichen, da das Kunststoffmaterial mit den Kurz- oder Langfasern nahezu gleich verteilt und ungerichtet gefüllt ist. Die zur definierten und zielgerichteten Verstärkung eines Bauteils verwendeten Endlosfasern können derzeit im Spritzguss nicht verarbeitet werden. Daher kann der Anforderung an eine ortsabhängige Verstärkung im Bauteil aufgrund von ortsabhängiger Beanspruchung und gleichzeitig geforderter Gewichtsminimierung nicht entsprochen werden.

Es besteht daher ein großer Bedarf an einem Verfahren zur Herstellung eines individuell endlosfaserverstärkten Strukturbauteils, das anforderungsgemäße mechanische Fähigkeiten bei gleichzeitiger Material- und Gewichtsreduktion gewährleistet. Zudem soll das Verfahren eine flexible Herstellung endlosfaserverstärkter Strukturbauteile ermöglichen sowie prozesssicher, kostengünstig, zuverlässig und ressourcenschonend ausführbar sein und in einfacher Art und Weise an eingesetzte Werkstoffe und/oder bauteilabhängige Anforderungen anpassbar sein.

Diese Aufgabe wird auf überraschend einfache aber wirkungsvolle Weise durch ein Verfahren zur Herstellung eines endlosfaserverstärkten Strukturbauteils, sowie ein Strukturbauteil nach der Lehre der unabhängigen Ansprüche gelöst.

Erfindungsgemäß ist ein Verfahren zur Herstellung eines endlosfaserverstärkten Strukturbauteils vorgeschlagen, welches zumindest die folgenden Schritte umfasst:
a) Additives Fertigen eines faserverstärkten Einlegers aus Matrix und zumindest einer die Matrix verstärkenden Endlosfaser;
b) Positionieren des Einlegers in einer Kavität eines Werkzeugs; und
c) Einbringen einer fließfähigen Schmelze in die Kavität des Werkzeugs zur Ausbildung des Grundkörpers des Strukturbauteils, wobei der Einleger beim Einbringen der Schmelze in das Werkzeug verdichtet wird.

Das erfindungsgemäße Verfahren beruht dabei auf dem Grundgedanken, dass durch die gezielte Einbringung von mit Endlosfasern verstärkten Einlegern das vorhandene Leichtbaupotential genutzt und Schwachstellen in Strukturbauteilen gezielt eliminiert werden können. Aufgrund der Bereitstellung der Einleger als additiv gefertigte Halbzeuge aus Endlosfasern und deren definierter Positionierung in einem Werkzeug, die zu einer definierten Positionierung im zu fertigenden Strukturbauteil führt, besteht eine optimale Kraftübertragung vom Grundkörper des Strukturbauteils zum Einleger und eine entsprechend hohe Belastbarkeit des Strukturbauteils während der Nutzung.

Im Rahmen der Erfindung betrifft der Begriff "Strukturbauteil" ein hochbelastbares Bauteil, insbesondere zur Verwendung in Fahrzeugen, welches aus unterschiedlichen Werkstoffen hergestellt ist. Aufgrund der Kombination mehrerer Werkstoffe in den Strukturbauteilen in Hybridbauweise kann auch gleichbedeutend zu Strukturbauteil der Begriff Hybridbauteil verwendet werden.

Im Rahmen der Erfindung betrifft der Begriff "additives Fertigen" eine Möglichkeit der Fertigung durch schichtweises Auftragen von Material in einer additiven Fertigungsanlage ohne weitere Werkzeuge oder Formen. Der schichtweise Aufbau erfolgt anhand eines Datensatzes, welcher die geometrischen Daten der einzelnen Schichten des zu erstellenden Bauteils sowie weitere Parameter, wie Verarbeitungstemperatur, Schichthöhe oder Auflösung, enthält. Die Festigkeit eines additiv gefertigten Bauteiles ist insbesondere abhängig von der Wahl des Infill-Musters und der Infill-Dichte, wobei der Begriff "Infill" die Füllung innerhalb eines additiv gefertigten Bauteils bezeichnet. Die Infill-Dichte wird dabei regelmäßig in Prozent angegeben. Bevorzugt sind im Rahmen der Erfindung ein trianguläres Infill-Muster und eine Infill-Dichte von 50 % vorgesehen. Um auch Endlosfasern verarbeiten zu können und somit endlosfaserverstärkte Bauteile mittels additiver Fertigung herstellen zu können, ist eine Ablegeeinheit, beispielsweise eine Düse, zur Ablage von Endlosfasern auf der Bauplattform an der additiven Fertigungsanlage angeordnet. Die Endlosfasern werden bevorzugt unidirektional einzeln und/oder gebündelt in einem Strang bereitgestellt und verarbeitet.

Der Begriff "Einleger" betrifft im Rahmen der Erfindung ein Halbzeug oder Bauteil, das zumindest eine weitere Funktion in das zu fertigende Strukturbauteil einbringen soll. Bevorzugt handelt es sich bei der weiteren Funktion um die Erhöhung der Belastbarkeit und/oder Verringerung des Gewichts. Nach der Verarbeitung ist ein Einleger vom Grundkörper des fertiggestellten Strukturbauteils zumindest teilweise, bevorzugt vollständig, umschlossen.

Der "Grundkörper" eines Strukturbauteils betrifft im Rahmen der Erfindung den Teil des Strukturbauteils, der die Form des Strukturbauteils ausbildet und den Einleger zumindest teilweise umschließt.

Im Rahmen der Erfindung betrifft der Begriff "Matrix" die Komponente eines additiv gefertigten Verbundbauteils oder Halbzeugs, insbesondere eines Einlegers, in welche Fasern eingebettet sind. Bevorzugt ist im Rahmen der Erfindung ein mit der Schmelze kompatibler Kunststoff als Matrixmaterial zu verwenden. Bei Verwendung einer Matrix aus Kunststoff kann die Gefahr der Werkzeugbeschädigung, wie sie bei metallischen Einlegern besteht, eliminiert werden.

Der im Rahmen der Erfindung vorgeschlagene Einleger ist ein Verbundbauteil aus Matrixmaterial und Endlosfasern, weshalb die Eigenschaften des Einlegers nicht nur von den mechanischen und thermischen Eigenschaften des Matrixmaterials, sondern auch signifikant von den mechanischen und thermischen Eigenschaften der Fasern, insbesondere der Faserlänge, der Faserorientierung und dem Faservolumenanteil, beeinflusst werden. Mit zunehmender Faserlänge steigen der E-Modul und die Zugfestigkeit der Fasern, weshalb in dem im Rahmen der Erfindung vorgeschlagenen Einleger Endlosfasern eingesetzt werden. Der Begriff "Endlosfaser" betrifft dabei Fasern mit einer Länge von mindestens 50 mm. Zur Erzielung der geforderten mechanischen und thermischen Eigenschaften des Einlegers können einzelne Fasern oder Faserstränge gerichtet, d.h. in einer definierten Ausrichtung, beispielsweise in Belastungsrichtung, in der Matrix abgelegt werden. Somit kann vorteilhafterweise ein hochfestes und gleichzeitig leichtes Verbundbauteil zur Weiterverarbeitung als Einleger im erfindungsgemäßen Verfahren bereitgestellt werden.

Während das Werkzeug im Wesentlichen das Negativ der Außenform für das herzustellende Strukturbauteil bildet und aus mehreren Einzelteilen bestehen kann, betrifft der Begriff "Kavität" die zur Herstellung des Strukturbauteils auszufüllende Hohlform. Ein Werkzeug kann dabei auch zur Herstellung mehrerer Strukturbauteile mehrere Kavitäten aufweisen.

Der Begriff "Schmelze" betrifft im Rahmen der Erfindung das Produkt der partiellen oder vollständigen Aufschmelzung durch Wärmezufuhr eines Werkstoffs, der unter Normalbedingungen fest ist. Es ist erkannt worden, dass die Schmelze in einem fließfähigen Zustand vorliegen muss, um ein einfaches und sicheres Einbringen in eine Kavität eines Werkzeugs zu gewährleisten. Es ist denkbar, eine thermoplastische, duroplastische oder elastomere Schmelze zu verwenden. Bevorzugt ist die Schmelze kompatibel zum Matrixmaterial des Einlegers, so dass Matrixmaterial und Schmelze beim Einbringen der Schmelze in Schritt c) des erfindungsgemäßen Verfahrens zumindest teilweise miteinander verschmelzen.

Das erfindungsgemäße Verfahren ermöglicht die Herstellung endlosfaserverstärkter Strukturbauteile mit hoher mechanischer Belastbarkeit bei gleichzeitig geringem Gewicht. Zudem ist das Verfahren äußerst flexibel einsetzbar, und die im Verfahren zu fertigenden Strukturbauteile sind schnell und einfach an geänderte Anforderungen anpassbar. Die hohe Flexibilität ergibt sich aus der additiven Fertigung des faserverstärkten Einlegers, wozu keine Werkzeuge oder Formen notwendig sind, so dass allein anhand eines Datensatzes, in der Regel ausgehend von einem CAD-Modell (Computer-Aided Design Model), eine Anpassung des Einlegers und somit des Strukturbauteils erfolgen kann. Bei der Herstellung des Einlegers wird zur Gewährleistung einer möglichst hohen Belastbarkeit bevorzugt ein isotropisches Anordnungsmuster der Fasern verwendet, wobei ein Winkelversatz der Fasern von 45° zwischen den einzelnen Schichten des Einlegers vorgesehen ist. Zudem ist für eine zuverlässige Verbindung zwischen Einleger und Grundkörper die Wärmeformbeständigkeitstemperatur der Matrix des Einlegers bevorzugt niedriger als oder gleich der Wärmeformbeständigkeitstemperatur des Materials der Schmelze, aus welchem der Grundkörper des Strukturbauteils gefertigt wird. Bevorzugt liegen die Wärmeformbeständigkeitstemperaturen in einem ähnlichen Bereich, so dass die Schmelze kompatibel zum Matrixmaterial des Einlegers ist und das Matrixmaterial und die Schmelze beim Einbringen der Schmelze in Schritt c) des erfindungsgemäßen Verfahrens zumindest teilweise miteinander verschmelzen. Entsprechend sollte auch für eine zuverlässige Verbindung zwischen Einleger und Grundkörper der Sprung zwischen dem Elastizitätsmodul (E-Modul) der Schmelze und dem des Einlegers nicht zu groß sein. Einleger und Schmelze sind bevorzugt auch hinsichtlich des E-Moduls kompatibel.

Die thermischen und mechanischen Eigenschaften werden unter anderem durch das Verhältnis von Matrix und Faser im faserverstärkten Einleger beeinflusst. Bevorzugt weist der faserverstärkte Einleger einen Faseranteil von zumindest 35 %, 36 %, 37 %, 38 %, 39 %, 40 %, 41 %, 42 %, 43 %, 44 %, 45 %, 46 %, 47 %, 48 %, 49 %, 50 %, 51 %, 52 %, 53 %, 54 %, 55 %, 56 %, 57 %, 58 %, 59 %, 60 %, 61 %, 62 %, 63 %, 64 %, 65 % auf.

Das Positionieren des Einlegers in einer Kavität eines Werkzeugs umfasst das definierte und zielgerichtete Ablegen an einer vorbestimmten Position in der Kavität des Werkzeugs. Dadurch können die Strukturbauteile prozesssicher und wiederholgenau gefertigt werden. Bevorzugt ist der Einleger so in der Kavität zu positionieren, dass der Einleger durch den Druck, der bei Einbringung der Schmelze auftritt, nicht aus seiner Positionierung gelöst wird. Besonders bevorzugt sollte ein direktes Auftreffen der Schmelze auf den Einleger verhindert werden, so dass die fließfähige Schmelze den Einleger lediglich nahezu drucklos umfließt.

Die Einleger können Hinterschneidungen, Rändelungen oder Einkerbungen aufweisen, welche zur formschlüssigen Verbindung mit der Schmelze und somit dem Grundkörper des Strukturbauteils vorgesehen sind. Je nach Ausführung der Hinterschneidungen, Rändelungen oder Einkerbungen sind die Einleger derart in der Kavität zu positionieren, dass die Hinterschneidungen, Rändelungen oder Einkerbungen von der Schmelze teilweise oder vollständig umflossen werden können.

Als erfindungswesentlich ist es erkannt worden, dass der Einleger und somit auch die Endlosfasern beim Einbringen der Schmelze in das Werkzeug verdichtet werden. Dadurch kann die Festigkeit des Einlegers weiter erhöht werden und die Belastbarkeit des Strukturbauteils, insbesondere an der Stelle, an welcher der Einleger positioniert ist, ebenfalls weiter erhöht werden. Denn gerade dies ist eine der wesentlichen vorteilhaften Auswirkungen der Erfindung, mittels derer es möglich ist, Verstärkungen gezielt und bedarfsgerecht in ein Strukturbauteil einzubringen und definiert genau an den Stellen zu positionieren, an welchen in der Nutzungsphase des Strukturbauteils die höchsten Belastungen entstehen oder die größten Schwachstellen identifiziert werden konnten. Die Verdichtung des Einlegers und somit auch der Endlosfasern beim Einbringen der Schmelze in das Werkzeug erfolgt, aufgrund des Drucks im geschlossenen Werkzeug, welcher auf den Einleger wirkt, nachdem dieser von der Schmelze zumindest teilweise umschlossen ist. Die Verdichtung bewirkt zudem vorteilhafterweise, dass Poren im Einleger, die bei der additiven Fertigung entstehen können, durch die Ausbildung des Grundkörpers in Schritt c) geschlossen werden. Es ist im Rahmen der Erfindung erkannt worden, dass dieses Schließen der Poren durch nachträgliches Verdichten des additiv gefertigten Einlegers sich vorteilhaft auf die Festigkeit des Einlegers und des gesamten Strukturbauteils auswirkt und diese noch weiter erhöht. Es ist des Weiteren im Rahmen der Erfindung erkannt worden, dass herkömmlich gefertigte, zum Beispiel in der Prepreg-Autoklavtechnik oder RTM-Technologie gefertigte, endlosfaserverstärkte Einleger aufgrund deren duroplastischer Matrix nicht weiter verdichtet werden können. Zudem bewirkt die Verdichtung der additiv gefertigten Einleger vorteilhafterweise, dass die Haftung der Schichten untereinander, welche beim schichtweisen Aufbau eines Bauteils in der additiven Fertigung entstehen, verbessert wird.

Mit Endlosfasern verstärkte additiv gefertigte Einleger können je nach Fertigungsparametern einen ausgeprägten Treppenstufeneffekt und zudem neben Poren auch abstehendende Faserenden aufweisen, was in der Regel einen Nachteil der additiven Fertigung darstellt. Der dem Fachmann bekannte Treppenstufeneffekt entsteht dadurch, dass Bauteiloberflächen, die schräg zur Richtung des Schichtauftrags liegen, nur stufig ausgeführt werden können, wodurch der Treppenstufeneffekt im Wesentlichen von der gewählten Schichthöhe abhängig ist. Es wurde jedoch als erfindungswesentlich erkannt, dass diese vermeintlichen Nachteile der additiven Fertigung genutzt werden können, um den beim Einbringen der Schmelze entstehenden Stoffschluss und Formschluss zwischen Einleger und Grundkörper zu stärken, da durch das Umschließen abstehender Faserenden und der Treppenstufen die Verbindung zwischen Einleger und Grundkörper gefestigt wird. Insbesondere die mittels der additiven Fertigung ausgebildete raue Oberfläche des Einlegers führt zu einem zusätzlichen Formschluss und somit zu einer verbesserten Kraftübertragung in der Grenzfläche zwischen Einleger und Schmelze.

Ein an Schritt c) des erfindungsgemäßen Verfahrens anschließendes Abkühlen des Strukturbauteils im Werkzeug verhindert eine Beschädigung durch Handhabung oder Transport, solange keine ausreichende Formbeständigkeit vorliegt. Jedoch ist es nicht zwingend notwendig, dass das Strukturbauteil im Werkzeug bis auf Raumtemperatur oder Umgebungstemperatur abkühlt. Vielmehr ist es erkannt worden, dass das Abkühlen bis zu einer für Handhabung und Transport ausreichenden Formbeständigkeit genügt.

Mittels des erfindungsgemäßen Verfahrens ist es somit möglich, ein hochbelastbares Strukturbauteil unter Nutzung des Leichtbaupotentials faserverstärkter Verbundwerkstoffe und gleichzeitiger Nutzung der Flexibilität additiver Fertigungsverfahren herzustellen, wobei sowohl das Strukturbauteil selbst als auch die Fertigung in einfacher Art und Weise an geänderte Anforderungen anpassbar sind.

Vorteilhafte Weiterbildungen der Erfindung, welche einzeln oder in Kombination realisierbar sind, sind in den Unteransprüchen dargestellt.

Es hat sich als vorteilhaft herausgestellt, den faserverstärkten Einleger in Schritt a) des erfindungsgemäßen Verfahrens extrusionsbasiert additiv zu fertigen. Es gibt eine Vielzahl additiver Fertigungstechnologien, wobei für die vorliegende Erfindung insbesondere die extrusionsbasierte Fertigung mittels Fused Layer Modeling (FLM), auch bekannt als Fused Deposition Modeling (FDM) oder Fused Filament Fabrication (FFF), oder die extrusionsbasierte Fertigung mittels Continuous Filament Fabrication (CFF) oder die extrusionsbasierte Fertigung mittels Composite Filament Co-Extrusion (CFC) oder die extrusionsbasierte Fertigung mittels Additive Fusion Technology (AFT) relevant ist. In vorteilhafter Weise kann bei der extrusionsbasierten additiven Fertigung die Bereitstellung des Matrixmaterials in Filamentform erfolgen, wodurch eine einfache Art der Verarbeitung, der Handhabung und Lagerung möglich ist.

Als "Filamente" werden im Rahmen der Erfindung fadenförmige Materialstränge bezeichnet, die in einer vorgelagerten Produktionsstufe gefertigt und somit als auf Spulen aufgewickeltes Halbzeug der additiven Fertigung zugeführt werden. Nicht nur das Matrixmaterial, sondern auch das Endlosfasermaterial kann in der extrusionsbasierten additiven Fertigung vorteilhafterweise auf Spulen aufgewickelt zur Verfügung gestellt und verarbeitet werden. Es ist zudem auch denkbar, ein bereits endlosfaserverstärktes Matrixmaterial in Filamentform bereitzustellen. Hierbei handelt es sich um eine Endlosfaser oder einen Endlosfaserstrang, welcher mit Matrixmaterial bereits ummantelt ist und ebenfalls auf einer Spule bereitgestellt wird.

Zur extrusionsbasierten additiven Fertigung wird das Material in eine Extrudereinheit gezogen und mittels Heizelementen im Druckkopf der Extrudereinheit erwärmt. Die Extrudereinheit ist in drei Richtungen, bevorzugt in X-, Y- und Z-Richtung, bewegbar und legt die zur Realisierung des Strukturbauteils notwendigen Schichten mittels einer Druckdüse auf einer Bauplattform, welche abgesenkt und/oder angehoben werden kann, ab. Nach Ablage einer Schicht wird die Bauplattform um eine Schichtdicke nach unten abgesenkt, so dass die Folgeschicht auf die vorhergehende Schicht aufgetragen werden kann. Zur extrusionsbasierten additiven Fertigung eines endlosfaserverstärkten Bauteils wird entweder Matrixmaterial und Fasermaterial gleichzeitig, bevorzugt über die gleiche Düse, auf der Bauplattform abgelegt, oder es werden separate Druckköpfe und Druckdüsen jeweils für Matrixmaterial und Endlosfaser verwendet. Werden Endlosfaser und Matrixmaterial separat zugeführt, so wird vorteilhafterweise zuerst eine Schicht aus Matrixmaterial aufgetragen, in welche anschließend die Endlosfaser entsprechend ihrer anforderungsgemäßen Ausrichtung eingebettet wird.

Um eine sichere Positionierung der Einleger in der Kavität des Werkzeugs zu erreichen, erfolgt die Positionierung des Einlegers vorteilhafterweise anhand von zumindest einem am Einleger angeordneten Abstandshalter. Der Begriff "Abstandshalter" betrifft im Rahmen der Erfindung einen am Einleger angeordneten Fortsatz oder eine Auswölbung, welche dazu dient, den Einleger in der Kavität des Werkzeugs zu positionieren. Hierdurch kann der Einleger sicher in der Kavität positioniert und eine Verschiebung des Einlegers durch die einfließende Schmelze verhindert werden. Zudem lässt sich der Einleger somit wiederholgenau an der Stelle des Strukturbauteils positionieren, an der eine Verstärkung erforderlich und vorgesehen ist. Des Weiteren stützen die Abstandshalter den Einleger vorteilhafterweise am Werkzeug ab und dienen der Einhaltung eines Mindestabstands zwischen der Einlegeroberfläche und dem Werkzeug, so dass die Schmelze den Einleger optimal umfließen kann.

Bevorzugt haben die Abstandshalter nur punktuellen Kontakt zur Kavität, um ein möglichst vollständiges Umfließen des Einlegers mit Schmelze zu ermöglichen. Bei ausreichend großer Dimensionierung der Abstandshalter wird eine Faserverlegung innerhalb der Abstandshalter bevorzugt, wodurch Beschädigungen, insbesondere aufgrund von Druck, verhindert werden können. Alternativ können die Abstandshalter auch aus einem metallischen Werkstoff hergestellt werden und/oder Teil des Werkzeugs sein, um eine plastische Verformung der Abstandshalter während des Herstellungsverfahrens des Strukturbauteils auszuschließen.

Bevorzugt werden an der Oberfläche des Einlegers Pins als Abstandshalter angeordnet. Diese Pins sind bevorzugt in der Form eines zylindrischen oder quaderförmigen Zapfens ausgebildet. Noch mehr bevorzugt sind halbkreiszylinderförmige Pins.

Weiterhin hat es sich als vorteilhaft erwiesen, wenn der Abstandshalter und der Einleger einstückig ausgebildet sind und/oder der Abstandshalter aus dem Material der Matrix des Einlegers ausgebildet ist. Dadurch kann der Abstandshalter ebenso wie der Einleger in Schritt a) des erfindungsgemäßen Verfahrens additiv gefertigt werden, ohne dass ein weiteres Produktionsverfahren oder ein weiterer Produktionsschritt notwendig ist. Zudem hat sich die Anordnung der Abstandshalter am Einleger als vorteilhaft erwiesen, da somit keine unerwünschten Öffnungen am herzustellenden Strukturbauteil entstehen und die Abstandshalter aufgrund der Flexibilität der additiven Fertigung in einfacher Art und Weise geändert und optimiert werden können.

In einer Weiterbildung der Erfindung ist es denkbar, dass vor Schritt a) des erfindungsgemäßen Verfahrens die zusätzlichen Schritte a01) und a02) erfolgen:
- a01): Lokalisierung der Position des Einlegers; und
- a02): Gestaltung des Einlegers.

Mittels dieser Ausgestaltung ist es möglich, die Position des Einlegers und dessen Gestaltung in Abhängigkeit der Anforderungen des erfindungsgemäßen Verfahrens und der Belastung des Strukturbauteils auszulegen. Insbesondere die Orientierung der Fasern des Einlegers wird vorteilhafterweise in Schritt a02) unter Berücksichtigung der Anisotropie des additiv gefertigten faserverstärkten Einlegers und der Anforderungen an das Strukturbauteil hinsichtlich mechanischer und thermischer Belastungen festgelegt. Bevorzugt erfolgt vorab in Schritt a01) zur Lokalisierung der Position des Einlegers im Strukturbauteil eine Finite-Elemente-Modellierung des Strukturbauteils und eine Ermittlung der Schwachstellen eines unverstärkten Strukturbauteils, anhand derer notwendige Verstärkungsmaßnahmen identifiziert werden können. Die anschließende Lokalisierung der exakten Position des Einlegers erfolgt unter Beachtung ausreichender Wandstärke, geeigneter Abstände zum Werkzeug, angemessen großer Fließspalten und der Möglichkeit zur Anbringung von Abstandshaltern. Die Wandstärke ist abhängig vom Fließverhalten der Schmelze und kann in bekannter Weise durch Füllanalysen ermittelt werden. Bevorzugt ist eine Wandstärke des Grundkörpers von mindestens 1 mm vorgesehen.

Besonders bevorzugt werden zur Lokalisierung der Position des Einlegers und dessen Gestaltung neben der Finite-Elemente-Modellierung eine Kraftflussoptimierung und eine Topologieoptimierung durchgeführt. Die Kraftflussoptimierung in Verbindung mit der Topologieoptimierung ermöglicht eine besonders effiziente Einleitung der bei Belastung auftretenden Kräfte in die Fasern des endlosfaserverstärkten Einlegers bei gleichzeitiger Reduzierung von Material und Gewicht. Bei der Gestaltung des Einlegers in Schritt a02) finden vorteilhafterweise nicht nur die Orientierung der Fasern des Einlegers Berücksichtigung, sondern auch zumindest die durch die additive Fertigung bedingte Schichtdicke, die mechanischen Kenngrößen der Endlosfaser und des Matrixmaterials sowie die Wandstärke. Somit kann sichergestellt werden, dass der Einleger einerseits aufgrund der bedarfsgerechten Orientierung der Fasern im Einleger die bei Belastung des Strukturbauteils auftretenden Kräfte anforderungsgemäß aufnehmen kann, und andererseits der Einleger mittels additiver Fertigung flexibel herstellbar ist. Bevorzugt ist eine Wandstärke des Einlegers von mindestens 0,25 mm vorgesehen.

Weiterhin hat es sich als vorteilhaft erwiesen, wenn die Endlosfasern in Schritt a), das heißt während der additiven Fertigung des Einlegers, in Belastungsrichtung gestreckt werden. Hierbei betrifft der Begriff "Belastungsrichtung" die Richtung, in welcher eine Belastung des Strukturbauteils bei dessen Gebrauch hauptsächlich erfolgt. Durch die erfindungsgemäße Streckung der Fasern des Einlegers bereits bei der additiven Fertigung des Einlegers ist bei Belastung des Strukturbauteils eine direkte und unmittelbare Kraftaufnahme durch die Endlosfasern möglich. Gattungsgemäß hergestellte Strukturbauteile durchlaufen hingegen zuerst eine Phase der elastischen und/oder plastischen Verformung des Grundkörpers, des Einlegers und/oder der Endlosfasern, bis eine Kraftaufnahme durch die Endlosfasern erfolgen kann.

Durch die Streckung der Fasern des Einlegers, die bereits im Zuge der additiven Fertigung erfolgt, kann vorteilhafterweise der Effekt erzielt werden, dass zur Ausnutzung der Tragfähigkeit während des Gebrauchs des Strukturbauteils keine plastische oder elastische Verformung der Endlosfasern oder des Strukturbauteils notwendig ist. Die Streckung der Endlosfasern erfolgt während der additiven Fertigung, indem die Endlosfasern schichtweise unter Spannung in Belastungsrichtung abgelegt werden. Es hat sich herausgestellt, dass dieser Effekt zusätzlich durch die Fließrichtung der Schmelze verstärkt werden kann. Das heißt, falls die Schmelze in Belastungsrichtung in die Kavität des Werkzeugs eingebracht wird, werden die Endlosfasern in Belastungsrichtung weiter gestreckt und sind bei Belastung sofort tragfähig.

Es hat sich als vorteilhaft erwiesen, wenn als Material der Matrix ein Thermoplast verwendet wird. Bevorzugt ist die Wärmeformbeständigkeitstemperatur des Materials der Matrix niedriger als oder gleich der Wärmeformbeständigkeitstemperatur der Schmelze, so dass neben einem Formschluss auch ein Stoffschluss zwischen Einleger und Grundkörper erzielt werden kann. Durch das Anschmelzen der Oberfläche des Einlegers beim Einbringen der Schmelze kann eine optimale Anbindung und somit Kraftübertragung zwischen Einleger und Grundkörper gewährleistet werden. Besonders bevorzugt ist das Material der Matrix ein Polyamid oder Polypropylen. Noch mehr bevorzugt ist das Material der Matrix ein Polypropylen.

Des Weiteren hat es sich als vorteilhaft erwiesen, wenn als Endlosfaser eine Glasfaser, Aramidfaser, Stahlfaser, Kohlenstofffaser, synthetische Faser, kunststoffbasierte Faser und/oder Keramikfaser verwendet wird. Bevorzugt wird aufgrund ihres wirtschaftlichen Potentials bei anforderungsgemäßer Festigkeit eine Glasfaser verwendet.

Weiterhin hat es sich als vorteilhaft erwiesen, wenn als Schmelze ein Thermoplast verwendet wird. Bevorzugt wird ein Polypropylen oder Polyamid als Schmelze verwendet.

Zur Steigerung der mechanischen Festigkeit des Grundkörpers hat es sich als vorteilhaft erwiesen, wenn die Schmelze faserverstärkt ist. Bevorzugt wird die Schmelze mit Glasfasern verstärkt. Weiter bevorzugt werden aufgrund ihrer mechanischen Festigkeit und Wirtschaftlichkeit verstärkte Polypropylene, beispielsweise mit Glasfasern oder Kohlenstofffasern verstärkte Polypropylene, als Schmelze verwendet. Am meisten bevorzugt wird ein langglasfaserverstärktes Polypropylen (LGF PP) mit einem Glasfaseranteil von zumindest 20 %, 30 %, 40%, 50% oder 60 % und einer Faserlänge von zumindest 8 mm, 9 mm, 10 mm, 11 mm, 12 mm, 13mm, 14 mm 15 mm, 16 mm, 17 mm, 18 mm, 19 mm, 20 mm, 21 mm, 22 mm, 23 mm, 24 mm oder 25 mm verwendet. Polypropylen mit Glasfaseranteil wird zur Verarbeitung bevorzugt in Form des Halbzeugs Granulat bereitgestellt. Derartige Thermopolaste sind auch als langfaserverstärkte Thermoplaste (LFT) bekannt. Besonders bevorzugt ist es, wenn das thermoplastische Material der Schmelze derart mit dem Einleger in Schritt c) des erfindungsgemäßen Verfahrens zusammenwirkt, dass Einleger und Grundkörper synchron erkalten und eine feste, prozessgenerierte Verbindung unter Kraft- und Formschluss miteinander ausbilden. Dieser Effekt ist besonders von der Wahl des Matrixwerkstoffs des Einlegers und des Materials der Schmelze beeinflusst.

In vorteilhafter Weise lässt sich eine besonders gute Verbindung zwischen Einleger und Grundkörper des Strukturbauteils erzielen, wenn das Material der Matrix des Einlegers und das Material der Schmelze zueinander kompatibel sind. Dem Fachmann ist dabei bekannt, dass Materialien kompatibel sind, sofern sie sich, beispielsweise im Spritzgussprozess, unter Hitzeeinwirkung verbinden lassen. Dies ist beispielsweise dann gegeben, wenn sich die Bereiche der Verarbeitungstemperaturen im Spritzguss des Materials der Matrix des Einlegers und des Materials der Schmelze überschneiden. Bevorzugt sind, um eine anforderungsgemäße Verbindung zwischen Einleger und Grundkörper zu erreichen, der Elastizitätsmodul und/oder die Schmelztemperatur und/oder die Verarbeitungstemperatur des Materials der Matrix des Einlegers und des Materials der Schmelze im Wesentlichen gleich. Besonders bevorzugt weisen das Material der Matrix des Einlegers und das Material der Schmelze das gleiche Polymer auf. Am meisten bevorzugt sind die Matrix des Einlegers und die Schmelze aus dem gleichen Material. Die Kompatibilität der Materialien von Matrix und Schmelze führt auch vorteilhafterweise dazu, dass die Oberfläche des Einlegers relativ schnell von der temperierten einströmenden Schmelze in Schritt c) des erfindungsgemäßen Verfahrens aufgeschmolzen werden kann und somit eine stoffschlüssige Verbindung zwischen Einleger und Grundkörper auch bei kurzen Prozesszeiten oder niedrigen Temperaturen der Schmelze erzielt wird. Ein Vorwärmen des Einlegers, wie es bei gattungsgemäßen Verfahren oftmals erforderlich ist, kann entfallen, wodurch ein Prozessschritt und somit Ressourcen eingespart werden können.

Des Weiteren hat es sich als vorteilhaft erwiesen, wenn das Einbringen der Schmelze in das Werkzeug mittels Spritzguss erfolgt. Bevorzugt können Thermoplaste vorteilhafterweise im Spritzguss verarbeitet werden, wodurch eine äußerst zuverlässige und wiederholgenaue Fertigung des Strukturbauteils gewährleistet werden kann. Besonders bevorzugt werden aufgrund ihrer mechanischen Festigkeit und Wirtschaftlichkeit sowie Automatisierbarkeit der Verarbeitung verstärkte Polypropylene, beispielsweise mit Langglasfasern verstärkte Polypropylene, in Schritt c) des erfindungsgemäßen Verfahrens mittels Spritzguss verarbeitet. Zur noch weiter bevorzugten Verarbeitung von Polypropylen mit Glasfaseranteil, das in Form des Halbzeugs Granulat bereitgestellt wird, weist das Werkzeug während der Spitzgusszyklen eine Temperatur von mindestens 30° C, mindestens 40° C, mindestens 50° C, mindestens 60° C, mindestens 70° C, mindestens 80° C, mindestens 90° C, mindestens 100°, mindestens 110° C oder mindestens 120° C auf. Besonders bevorzugt hat das Werkzeug während der Spritzgusszyklen eine Temperatur von 90° C. In Schritt c) des Verfahrens fließt die thermoplastische Schmelze bevorzugt mit einer erhöhten Temperatur und unter Druckbeaufschlagung in die Kavität des Werkzeugs ein, so dass der Einleger oberflächig aufgeschmolzen wird. Besonders bevorzugt weist die einfließende Schmelze eine Temperatur von mindestens 250° C, mindestens 260° C, mindestens 270° C, mindestens 280° C, mindestens 290° C, mindestens 300° C, mindestens 310° C oder mindestens 320° C auf. Besonders bevorzugt weist die einfließende Schmelze einen Druck (Spritzdruck) von mindestens 600 bar, mindestens 700 bar, mindestens 800 bar, mindestens 900 bar, mindestens 1000 bar, mindestens 1100 bar, mindestens 1200 bar, mindestens 1300 bar, mindestens 1400 bar oder mindestens 1500 bar auf. Weitere Prozessparameter zur Fertigung des Grundkörpers mittels Spritzguss, wie beispielsweise die Dauer der Nachdruckphase oder der Restkühlung, können in Abhängigkeit der Geometrie des Strukturbauteils, der eingesetzten Werkstoffe und/oder der verwendeten Fertigungsanlagen ermittelt werden. Das Einbringen der Schmelze in das Werkzeug mittels Spritzguss führt vorteilhafterweise dazu, dass Einleger und Grundkörper synchron erkalten und sich in einer festen, prozessgenerierten Verbindung unter Kraft- und Formschluss reproduzierbar miteinander verbinden. Dieser Effekt ist besonders von der Wahl des Matrixwerkstoffs des Einlegers und des Materials der Schmelze beeinflusst. Des Weiteren kann der Grundkörper des Strukturbauteils besonders effizient und in einfacher Art und Weise ausgeformt werden, wenn das Einbringen der Schmelze in das Werkzeug mittels Spitzguss erfolgt. Der Spritzguss bietet vorteilhafterweise die Möglichkeit, langlebige, hochfeste Produkte wiederholgenau und prozesssicher herzustellen. Zudem bietet der Spritzguss eine hohe Flexibilität hinsichtlich Materialauswahl und Prozessparametern sowie eine nahezu freie Wahl von Form- und Oberflächenstruktur, welche durch die Gestaltung des Werkzeugs vorgegeben wird. Mittels des erfindungsgemäßen Verfahrens ist es somit möglich, ein hochbelastbares Strukturbauteil unter Nutzung der weit verbreiteten, wirtschaftlichen und automatisierbaren Kunststoffspritzgusstechnik bei gleichzeitiger Nutzung der Flexibilität additiver Fertigungsverfahren herzustellen, wobei sowohl das Strukturbauteil selbst als auch die Fertigung in einfacher Art und Weise an geänderte Anforderungen anpassbar sind.

Es hat sich zudem als vorteilhaft erwiesen, insbesondere wenn das Einbringen der Schmelze in das Werkzeug mittels Spritzguss erfolgt, dass ein Angusspunkt im Spritzguss in Abhängigkeit der Faserverstärkung und der Lokalisierung des Einlegers gewählt wird. Hierbei kann der Angusspunkt vorteilhafterweise so gewählt werden, dass der Einleger einerseits optimal umflossen wird und andererseits nicht durch das Einbringen der Schmelze in das Werkzeug verschoben werden kann. Bevorzugt ist der Angusspunkt derart gewählt, dass die Schmelze in Belastungsrichtung der Fasern des Einlegers einströmt und dadurch die Endlosfasern des Einlegers in Belastungsrichtung weiter streckt.

Des Weiteren hat es sich als vorteilhaft erwiesen, wenn das Bruchverhalten des Strukturbauteils in Schritt a) definiert wird. Es hat sich gezeigt, dass ausschließlich kurzfaserverstärkte Strukturbauteile bei Versagen ein Sprödbruchverhalten aufweisen, was jedoch aufgrund des schlagartig auftretenden Materialversagens nicht gewünscht ist. Durch die Anordnung von Endlosfasern im Einleger und die entsprechende Positionierung des Einlegers im Strukturbauteil kann jedoch ein Sprödbruchverhalten vermieden werden. Das Auftreten von Sprödbruchverhalten kann durch die bevorzugte Verwendung von Langglasfasern in der Schmelze kombiniert mit der Anordnung von Endlosfasern im Einleger und der entsprechenden Positionierung des Einlegers im Strukturbauteil noch zuverlässiger vermieden werden. Hierzu ist das Strukturbauteil bevorzugt im Vorfeld der Auslegung und Fertigung des Einlegers daraufhin zu untersuchen, an welchen Stellen vermehrt Brüche während der Nutzungsphase des Strukturbauteils in Abhängigkeit der Belastungen während der Nutzung auftreten können. Diese Bereiche sind dann insbesondere bei der Gestaltung, Lokalisierung und Fertigung des Einlegers zu berücksichtigen und entsprechend mit Endlosfasern zu verstärken.

Erfindungsgemäß ist weiterhin ein Strukturbauteil, hergestellt nach dem erfindungsgemäßen Verfahren, vorgeschlagen, welches einen Grundkörper und einen in den Grundkörper eingebetteten Einleger aufweist, wobei der Einleger und somit auch die Endlosfasern durch die Ausbildung des Grundkörpers zusätzlich verdichtet sind. Ein derart gefertigtes Strukturbauteil kann beispielsweise im Automobilbereich als Sitzstruktur, Durchlade, Gaspedal oder in der Robotik in Form von Armen, Greifern oder ähnlichen Vorrichtungen an einem Roboter eingesetzt werden. Auch ist es möglich, derartige Strukturbauteile als medizinische Bauteile, insbesondere zur Unterstützung des Bewegungsapparates sowie als Bauteile für Orthesen oder Prothesen, einzusetzen. Ein Strukturbauteil aus einem Grundkörper und einem in den Grundkörper eingebetteten Einleger ermöglicht eine belastungsoptimierte und automatisierte Integration von Endlosfasern in ein Strukturbauteil. Bevorzugt ist der Grundkörper ein Spritzgussbauteil, in welches der mit Endlosfasern verstärkte Einleger eingelegt ist. Der Einleger ist bevorzugt mittels additiver Fertigung hergestellt, was auch komplizierte oder bionische Strukturen ermöglicht. Aufgrund des zwischen Einleger und Grundkörper ausgebildeten Stoffschlusses und Formschlusses ist eine optimale Kraftübertragung gewährleistet. Vorteilhafterweise erlaubt der Aufbau aus Grundkörper und endlosfaserverstärktem Einleger die gezielte Einbringung der Einleger und somit auch der Endlosfasern in den Grundkörper des Strukturbauteils, wodurch sich ein signifikantes Leichtbaupotential und eine gezielte Eliminierung von Schwachstellen im Strukturbauteil, beispielsweise aufgrund von Bindenähten, ergeben. Insbesondere Bindenähte stellen bei der Verarbeitung einer, insbesondere mit Langglasfasern verstärkten, Schmelze eine Herausforderung dar, da im Bereich der Bindenähte die Festigkeit aufgrund fehlender Faserverstärkung stark abnimmt. Durch den Stoffschluss zwischen Einleger und Grundkörper können die im Einleger orientierten Fasern verdichtet und Schwachstellen eliminiert werden. Denn durch das zumindest teilweise Umschließen des Einlegers mit der Schmelze, die den Grundkörper ausbildet, wird ein Druck auf den Einleger ausgeübt, so dass der Einleger und die Endlosfasern im Einleger verdichtet werden. Die Verdichtung bewirkt vorteilhafterweise, dass Poren im Einleger, die bei der additiven Fertigung entstehen können, durch die Ausbildung des Grundkörpers geschlossen werden. Es ist im Rahmen der Erfindung erkannt worden, dass dieses Schließen der Poren durch nachträgliches Verdichten des additiv gefertigten Einlegers sich vorteilhaft auf die Festigkeit des Einlegers und des gesamten Strukturbauteils auswirkt. Es ist des Weiteren im Rahmen der Erfindung erkannt worden, dass herkömmlich gefertigte, zum Beispiel in der Prepreg-Autoklavtechnik oder RTM-Technologie gefertigte, endlosfaserverstärkte Einleger aufgrund deren duroplastischer Matrix nicht weiter verdichtet werden können. Zudem bewirkt die Verdichtung der additiv gefertigten Einleger vorteilhafterweise, dass die Haftung der Schichten untereinander, welche beim schichtweisen Aufbau eines Bauteils in der additiven Fertigung entstehen, verbessert wird.

Es hat sich als vorteilhaft erwiesen, dass zumindest ein Lastpfad innerhalb des Strukturbauteils vorgegeben ist, und die Endlosfasern des Einlegers entlang des vorgegebenen Lastpfads angeordnet sind. Der Lastpfad definiert den Weg, den die Kraft bei Belastung durch das Strukturbauteil nimmt. Somit kann vorteilhafterweise die Verstärkung durch den Einleger anforderungsgerecht und belastungsoptimiert in das Strukturbauteil eingebracht werden. Dies ermöglicht insbesondere die optimale Kombination der eingesetzten Materialien hinsichtlich Gewichtseinsparung und Steifigkeit. Mit anderen Worten ist eine lokale belastungsspezifische Verstärkung des Bauteils, orientiert an den während der Benutzung des Bauteils auftretenden Belastungen und der anforderungsgemäßen Ableitung der auftretenden Kräfte, möglich, so dass das Leichtbaupotential ausgeschöpft und die Ressourceneffizienz, insbesondere durch Materialeinsparungen, gesteigert werden kann.

Insbesondere hat es sich als vorteilhaft erwiesen, dass das Strukturbauteil als Armlehne für ein Fahrzeug mit einer Sitzvorrichtung ausgebildet ist und wenigstens eine Lagereinheit aufweist. Über die Lagereinheit kann die Armlehne in einer vertikalen oder horizontalen Schwenkachse gegenüber einer Sitzvorrichtung schwenkbar gelagert werden. Bei der Lagereinheit handelt es sich bevorzugt um ein Drehlager mit zylindrischer Lagerung. Eine Armlehne weist ein hohes Potential zur Gewichtseinsparung auf und ist während der Nutzung hohen Belastungen, insbesondere im Bereich des Lagers, ausgesetzt, weshalb sich eine Herstellung mit dem erfindungsgemäßen Verfahren besonders vorteilhaft auf Gewicht und Lebensdauer auswirkt.

Die Anordnung des Einlegers im Bereich der Lagereinheit der Armlehne führt vorteilhafterweise dazu, dass der Einleger im Bereich der größten Beanspruchung der Armlehne angeordnet ist. Denn die Armlehne muss neben den beim Auflegen des Arms entstehenden Kräften auch den hohen Missbrauchskräften widerstehen, die beispielsweise beim Einsteigen in das Fahrzeug auf die Armlehne ausgeübt werden. Die derart ausgeübten Belastungen gelangen durch den Kraftfluss entlang des Bauteils in den Bereich der Lagereinheit.

Des Weiteren hat es sich als vorteilhaft erwiesen, wenn die Lagereinheit in einer Bohrung durch den Grundkörper der Armlehne angeordnet ist und der Einleger die Bohrung zumindest teilweise umschließt. Denn die Bohrung ist aufgrund der auftretenden Kräfte hoher Zugbelastung und Scherung ausgesetzt. Durch die Anordnung des additiv gefertigten Einlegers im Bereich der Lagereinheit wird die Bohrung vorteilhafterweise verstärkt und die Gefahr des Materialbruchs an dieser hochbelasteten Stelle des Strukturbauteils minimiert. Bevorzugt wird ein Einleger in Form einer Scheibe mit einer zentralen Einlegerausnehmung, die in Form einer Bohrung ausgebildet sein kann, als Aussparung für die Lagereinheit und das Befestigungssystem der Armlehne an der Sitzvorrichtung verwendet. Hierbei ist es denkbar, dass der Einleger bei der Fertigung des Grundkörpers der Armlehne so in der Kavität fixiert wird, dass die Einlegerausnehmung konzentrisch zur Bohrung des Grundkörpers des Strukturbauteils positioniert ist. Dabei weist die Einlegerausnehmung bevorzugt einen größeren Durchmesser auf als die im Grundkörper vorgesehene Bohrung, damit die Schmelze auch die Zwischenräume ausfüllen kann. Der Einleger wird zudem bevorzugt mit vier oder mehr Abstandshaltern in der Kavität des Werkzeugs positioniert.

Weiterhin ist es denkbar, dass eine Verstärkung nicht nur im Bereich der Lagereinheit der Armlehne vorgesehen wird, sondern auch im Bereich der Auflagefläche der Armlehne, da auch hier hohe Belastungen auftreten. Dementsprechend kann entweder ein Einleger vorgesehen sein, der den Bereich der Lagereinheit und den Bereich der Armauflagefläche der Armlehne verstärkt, oder mehrere Einleger, welche in unterschiedlichen Bereichen des Strukturbauteils angeordnet werden. Zudem ist es denkbar, dass auch im Bereich von Anschlagflächen, die einer hohen Flächenpressung ausgesetzt sind, beispielsweise wenn eine Armlehne hochgeklappt wird und eine Missbrauchskraft auf den Anschlag wirkt, eine Verstärkung mit einem Einleger vorgesehen wird.

Es wird davon ausgegangen, dass die Definitionen und/oder die Ausführungen der oben genannten Begriffe für alle in dieser Beschreibung beschriebenen Aspekte gelten, sofern nichts anderes angegeben ist.

Weitere Einzelheiten, Merkmale und Vorteile der Erfindung ergeben sich aus den in der nachfolgenden Beschreibung bevorzugten Ausführungsbeispielen in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktion einander entsprechende Elemente. Die folgenden Ausführungsbeispiele dienen lediglich dazu, die Erfindung zu illustrieren. Sie sollen den Gegenstand der Patentansprüche in keiner Weise beschränken.

Im Einzelnen zeigen:
- **Fig. 1**: ein gattungsgemäßes Bauteil in perspektivischer Ansicht;
- **Fig. 2**: ein erfindungsgemäßes endlosfaserverstärktes Strukturbauteil in perspektivischer Ansicht;
- **Fig. 3**: die Schnittdarstellung entlang der Schnittachse A-A des in Fig. 2 dargestellten erfindungsgemäßen endlosfaserverstärkten Strukturbauteils;
- **Fig. 4**: eine weitere Ausführungsform eines erfindungsgemäßen endlosfaserverstärkten Strukturbauteils in perspektivischer Ansicht;
- **Fig. 5**: einen erfindungsgemäßen Einleger in perspektivischer Ansicht;
- **Fig. 6**: ein als Armlehne ausgestaltetes erfindungsgemäßes Strukturbauteil mit dem in Fig. 5 gezeigten Einleger in perspektivischer Ansicht; und
- **Fig. 7**: ein Flussdiagramm gemäß einer Ausführungsform des Verfahrens zur Herstellung eines endlosfaserverstärkten Strukturbauteils.

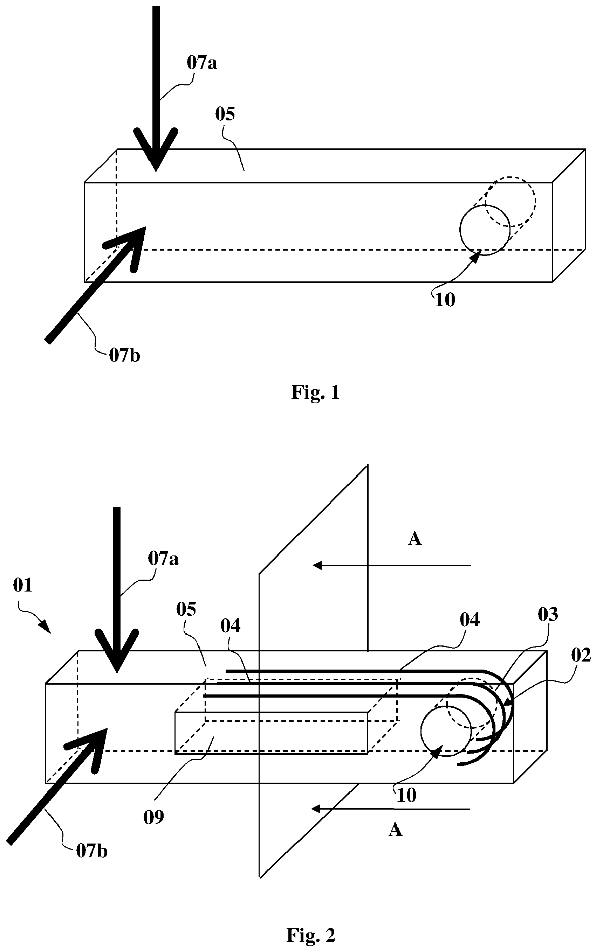

**Fig. 1** zeigt ein gattungsgemäßes Bauteil, beispielsweise für den Einsatz in einem Fahrzeug als Armlehne, mit einem Grundkörper 05 und einer Bohrung 10. Es kann beispielsweise vorgesehen sein, dass in der Bohrung 10 eine hier nicht dargestellte Lagereinheit zur schwenkbaren Lagerung des Bauteils angeordnet wird. Bei entsprechender Lagerung über eine in der Bohrung 10 angeordnete Lagereinheit werden bei der Nutzung des abgebildeten Bauteils die relevanten Krafteinleitungen 07a und 07b von der Seite und von oben erfolgen. Wie der Fig. 1 zu entnehmen ist, weist das dargestellte Bauteil keine Verstärkungen auf, sondern besteht lediglich aus einem einfachen Grundkörper, der beispielsweise im Spritzguss aus einem Thermoplast gefertigt wurde. Daher erfolgt aufgrund des homogenen Aufbaus des Bauteils keine definierte Ableitung der Kräfte über Lastpfade. Die Festigkeit des Bauteils wird lediglich durch das Material des Grundkörpers bestimmt, und es kann im Versagensfall zu einem unerwünschten Sprödbruch kommen.

Die zuvor genannten Nachteile werden durch das erfindungsgemäße Strukturbauteil 01, welches in **Fig. 2** dargestellt ist, überwunden. Das Strukturbauteil 01 weist im Wesentlichen die gleiche Umrisscharakteristik wie das in Fig. 1 dargestellte gattungsgemäße Bauteil auf, und auch die Bohrung 10 sowie die Krafteinleitung 07a, 07b sind identisch vorgesehen. Jedoch ist in den Grundkörper 05 des erfindungsgemäßen Strukturbauteils 01 ein Einleger 02 integriert. Es ist der Fig. 2 zu entnehmen, dass der Einleger 02 aus mehreren Endlosfasern 04 und einer Matrix 03 aufgebaut ist. Zudem ist der Einleger 02 vollständig vom Grundkörper 05 umschlossen. Es ist zu erkennen, dass die Endlosfasern einen im Wesentlichen geraden Bereich, der parallel zur Oberseite des Strukturbauteils 01 verläuft, welche beispielsweise eine Armauflagefläche ausbildet, aufweist. Daneben weist der Einleger 02 und somit auch die Endlosfaser 04 einen gekrümmten, hier halbkreisförmigen, Bereich auf, welcher sich zumindest teilweise um die Bohrung 10 herum erstreckt. Mittels der vorgesehenen Ausgestaltung des Einlegers 02 und der entsprechenden Positionierung des Einlegers 02 im Grundkörper 05 kann ein Lastpfad im Strukturbauteil 01 ausgebildet werden, welcher die eingeleiteten Kräfte 07a, 07b optimal aufnimmt und über die Endlosfasern 04 ableitet. Daher ist es möglich, am erfindungsgemäßen Strukturbauteil 01 zusätzlich Gewicht und Material einzusparen, indem eine Ausnehmung 09 im Grundkörper 05 vorgesehen wird. Diese Ausnehmung 09 ist vorliegend unterhalb des Bereichs angeordnet, in dem sich die Endlosfasern 04 längs erstrecken.

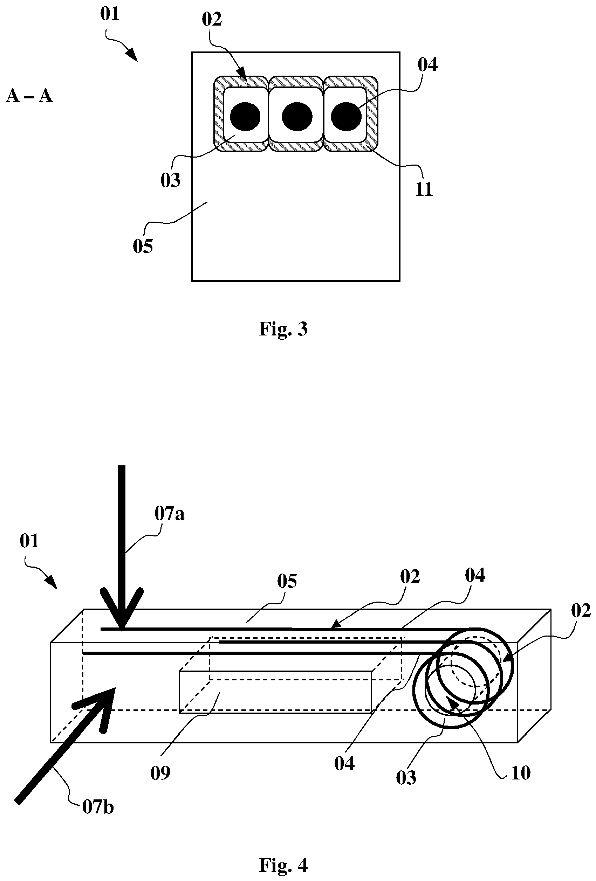

Die **Fig. 3** zeigt die Schnittansicht A-A durch die in Fig. 2 eingezeichnete Schnittebene A-A. Anhand der Schnittansicht ist deutlich zu erkennen, dass der Einleger 02 vom Grundkörper 05 vollständig umschlossen ist. Vorteilhafterweise kann dies mittels Umspritzen im Spitzgussprozess erfolgen. Der Einleger 02 kann beliebig viele Schichten an Endlosfasern 04 je nach auftretenden Kräften aufweisen, wobei im vorliegenden Ausführungsbeispiel drei Endlosfasern 04 gezeigt sind. Dies dient jedoch nur der Veranschaulichung, wobei die Anzahl der Endlosfasern 04 beliebig variierbar ist. Es ist auch zu erkennen, dass die Endlosfasern 04 vollständig von der Matrix 03 umschlossen sind. In Abhängigkeit von der Zahl der Endlosfasern 04, hier drei Endlosfasern 04, ist auch die Anzahl der Schichten in der additiven Fertigung definiert. Das heißt mit anderen Worten, dass der vorliegend dargestellte Einleger 02 drei Schichten aus Matrix 03, in die jeweils eine Endlosfaser 04 eingebettet ist, aufweist. Des Weiteren ist der Fig. 3 ein Übergangsbereich 11 zu entnehmen. Dieser Übergangsbereich 11 stellt den Bereich dar, in dem der Stoffschluss zwischen Grundkörper 05 und Matrix 03 des Einlegers 02 während des Umschließens des Einlegers 02 durch die Schmelze des Grundkörpers 05 ausgebildet wird.

Die **Fig. 4** zeigt eine weitere Ausführungsform eines erfindungsgemäßen Strukturbauteils 01. Es sind wiederum die Richtungen der Krafteinleitung 07a, 07b zu erkennen sowie der erfindungsgemäße Aufbau des Einlegers aus Endlosfasern 04 und Matrix 03. In Abweichung zu dem in Fig. 2 dargestellten Strukturbauteil 01 sind bei dem in Fig. 4 dargestellten Strukturbauteil 01 zwei Einleger 02 zur Verstärkung des Grundkörpers 05 vorgesehen. Ein erster Einleger 02 verläuft entlang der Oberseite der Längserstreckung des Grundkörpers 05, so dass dieser erste Einleger 02 beispielsweise eine Auflagefläche, welche an der Oberseite des Strukturbauteils angeordnet ist, verstärkt. Der zweite Einleger 02 ist zur Verstärkung des Bereichs, in dem die Bohrung 10 in den Grundkörper 05 eingebracht ist, vorgesehen. Daher erstreckt sich der zweite Einleger 02 derart um die Bohrung 10, dass diese vom Einleger 02 umschlossen wird. Aufgrund der Kraftableitung entlang definierter Lastpfade kann wiederum eine Aussparung 09 in den Grundkörper 05 eingebracht werden, um Ressourcen einzusparen.

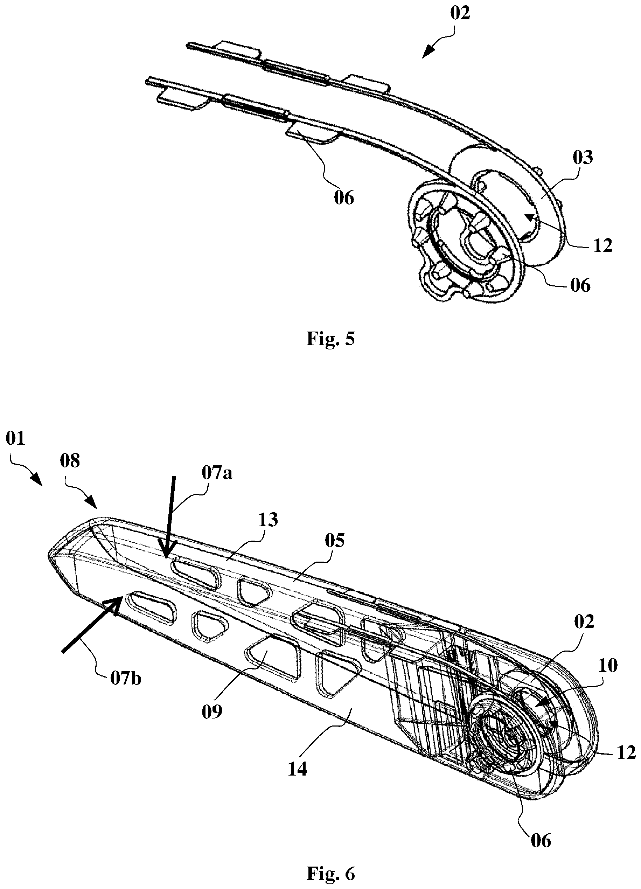

Die **Fig. 5** zeigt einen erfindungsgemäßen Einleger 02, welcher eine Matrix 03 und hier nicht dargestellte Endlosfasern 04 aufweist. Zudem sind am Einleger 02 Abstandshalter 06 angeordnet, welche einstückig mit dem Einleger 02 ausgebildet und aus dem gleichen Material wie die Matrix 03 gefertigt sind. Wie der Fig. 5 zu entnehmen ist, sind die um die Einlegerausnehmung 12 angeordneten Abstandshalter 06 konisch in der Form eines Kegelstumpfs ausgebildet. Durch die in der Form eines Kegelstumpfs ausgebildeten Abstandshalter 06 weisen die Abstandshalter 06 eine ausreichende Abstützwirkung während der Fertigung des hier nicht dargestellten Strukturbauteils 01 auf, wozu nur eine geringe Anlagefläche in einem hier nicht dargestellten Werkzeug notwendig ist. Im Gegensatz dazu sind die Abstandshalter 06 am längserstreckten Bereich des Einlegers 02 plattenförmig ausgebildet, um eine ausreichende Abstützwirkung und zuverlässige Positionierung des Einlegers 02 zu bewirken.

Der **Fig. 6** ist ein als Armlehne 08 für ein Fahrzeug mit einer Sitzvorrichtung ausgebildetes Strukturbauteil 01 zu entnehmen. Der Grundkörper 05 der Armlehne 08 ist mit dem in Fig. 5 dargestellten Einleger 02 verstärkt. Die Krafteinleitung in die Armlehne 08, insbesondere während der Nutzung der Armlehne 08, erfolgt gemäß den Krafteinleitungsrichtungen 07a und 07b. Das heißt, dass die Armlehne 08 während der Nutzung sowohl von oben durch Belastung der Armauflagefläche 13 als auch von der Seite durch Belastung einer Seitenfläche 14 belastet werden kann. Der Einleger 02 weist die bereits in Fig. 5 dargestellten Abstandshalter 06 und eine Einlegerausnehmung 12 auf. Die Einlegerausnehmung 12 weist einen geringfügig größeren Durchmesser auf als die im Grundkörper 05 vorgesehene Bohrung 10 zur Aufnahme einer nicht dargestellten Lagereinheit. Zudem ist der Fig. 6 entnehmbar, dass der Einleger 02 so gegenüber dem Grundkörper 05 positioniert ist, dass die Einlegerausnehmung 12 konzentrisch zur Bohrung 10 des Grundkörpers 05 angeordnet ist. Aufgrund der Erhöhung von Steifigkeit und Festigkeit der Armlehne 08 durch den Einleger 02 können Material und Gewicht eingespart werden, indem am Grundkörper 05 Ausnehmungen 09 vorgesehen werden. Gemäß dem hier dargestellten Ausführungsbeispiel sind vier Ausnehmungen 09, die sich quer zur Längserstreckung der Armlehne 08 durch die Armlehne 08 hindurch erstrecken, vorgesehen. Dies ist jedoch nur eine beispielhafte Ausgestaltung, weshalb sowohl die Form als auch die Anzahl der Ausnehmungen 09 variierbar ist.

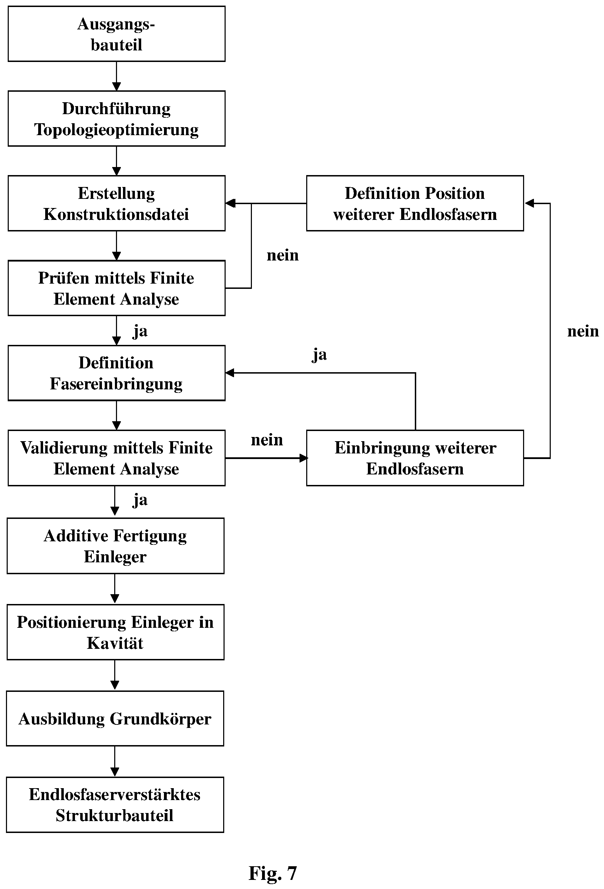

**Fig. 7** stellt schematisiert ein Verfahren zur Herstellung eines endlosfaserverstärkten Strukturbauteils dar. Hierbei wird von einem bekannten Ausgangsbauteil, beispielsweise einer Armlehne, ausgegangen, welche hinsichtlich Gewicht, Material und Steifigkeit optimiert werden soll. Zur Lokalisierung der Position des Einlegers im Strukturbauteil und zur Gestaltung der Einleger im Strukturbauteil ist es vorgesehen, vor der additiven Fertigung des Einlegers eine Topologieoptimierung und nach Erstellung einer Konstruktionsdatei eine Prüfung des erstellten Strukturbauteils mittels Finite-Elemente-Analyse durchzuführen. Zudem kann die Prüfung parallel oder anschließend zur Finiten-Elemente-Analyse auch eine rheologische Füllanalyse und/oder eine Ermittlung der Bindenähte umfassen. Falls die Prüfung, insbesondere die Finite-Elemente-Analyse, die Weiterverarbeitung der Konstruktionsdatei aufgrund eines positiven Ergebnisses, insbesondere ausreichender Festigkeit, zulässt, erfolgt die Definition der Fasereinbringung. Hierbei werden die Position sowie die Anzahl der Endlosfasern definiert. Die Definition der Fasereinbringung wird im nächsten Schritt "Validierung mittels Finite-Elemente-Analyse" überprüft. Auch die Validierung kann parallel oder anschließend zur Finiten-Elemente-Analyse eine rheologische Füllanalyse und/oder eine Ermittlung der Bindenähte umfassen. Falls die Validierung zu einem negativen Ergebnis gelangt, sind die Einbringung weiterer Endlosfasern und/oder die Definition der Positionierung weiterer Endlosfasern notwendig. Falls die Validierung mittels Finite-Elemente-Analyse zu einem positiven Ergebnis im Sinne einer ausreichenden Festigkeit führt, kann im nächsten Schritt die additive Fertigung des Einlegers erfolgen. Anschließend erfolgt die Positionierung des Einlegers, bevorzugt mittels Abstandshaltern, in der Kavität eines Werkzeugs, bevorzugt in der Kavität eines Spritzgusswerkzeugs, gefolgt von der Ausbildung des Grundkörpers, bei dem der Einleger von der Schmelze des Grundkörpers zumindest teilweise umschlossen wird, um einen Stoffschluss zwischen Einleger und Grundkörper zu erzielen. Nach Erhärten der Schmelze des Grundkörpers ist ein endlosfaserverstärktes Strukturbauteil mit lastgerechter Verstärkung bei gleichzeitiger Gewichtseinsparung bereitgestellt.

## Patentansprüche

1. Verfahren zur Herstellung eines endlosfaserverstärkten Strukturbauteils (01) umfassend zumindest die folgenden Schritte:
a) Additives Fertigen eines faserverstärkten Einlegers (02) aus Matrix (03) und zumindest einer die Matrix (03) verstärkenden Endlosfaser (04);
b) Positionieren des Einlegers (02) in einer Kavität eines Werkzeugs (03); und
c) Einbringen einer fließfähigen Schmelze (04) in die Kavität des Werkzeugs (03) zur Ausbildung eines Grundkörpers (05) des Strukturbauteils (01), wobei der Einleger (02) beim Einbringen der Schmelze in das Werkzeug (03) verdichtet wird.

2. Verfahren nach Anspruch 1,
wobei das additive Fertigen extrusionsbasiert erfolgt.

3. Verfahren nach Anspruch 1 oder 2,
wobei das Positionieren des Einlegers (02) anhand von zumindest einem am Einleger (02) angeordneten Abstandshalter (06) erfolgt.

4. Verfahren nach Anspruch 3,
wobei der Abstandshalter (06) und der Einleger (02) einstückig ausgebildet werden und/oder der Abstandshalter (06) aus dem Material der Matrix (03) ausgebildet ist.

5. Verfahren nach einem der Ansprüche 1 bis 4,
wobei Schritt a) zusätzlich die Schritte a01) und a02) umfasst:
a01) Lokalisierung der Position des Einlegers (02) im Strukturbauteil (01); und
a02) Gestaltung des Einlegers (02).

6. Verfahren nach einem der Ansprüche 1 bis 5,
wobei die Endlosfaser (04) in Schritt a) in Belastungsrichtung gestreckt wird.

7. Verfahren nach einem der Ansprüche 1 bis 6,
wobei die Schmelze faserverstärkt, insbesondere mit Glasfasern verstärkt, ist.

8. Verfahren nach einem der Ansprüche 1 bis 7,
wobei das Einbringen der Schmelze in das Werkzeug mittels Spritzguss erfolgt und ein Angusspunkt im Spritzguss in Abhängigkeit der Faserverstärkung und der Lokalisierung des Einlegers (02) gewählt wird.

9. Verfahren nach einem der Ansprüche 1 bis 8,
wobei das Bruchverhalten des Strukturbauteils (01) in Schritt a) definiert wird.

10. Strukturbauteil hergestellt mit einem Verfahren nach einem der vorhergehenden Ansprüche, aufweisend einen Grundkörper (05) und einen in den Grundkörper (05) eingebetteten Einleger (02), wobei der Einleger (02) durch die Ausbildung des Grundkörpers (05) verdichtet ist.

11. Strukturbauteil nach Anspruch 10,
**dadurch gekennzeichnet,**
**dass** Einleger (02) und Grundkörper (05) stoffschlüssig verbunden sind.

12. Strukturbauteil nach Anspruch 10 oder 11,
**dadurch gekennzeichnet,**
**dass** zumindest ein Lastpfad innerhalb des Strukturbauteils (01) vorgegeben und die Endlosfaser (04) des Einlegers (02) entlang des vorgegebenen Lastpfads angeordnet ist.

13. Strukturbauteil nach einem der Ansprüche 10 bis 12,
**dadurch gekennzeichnet,**
**dass** das Strukturbauteil (01) als Armlehne (08) für ein Fahrzeug mit einer Sitzvorrichtung ausgebildet ist und wenigstens eine Lagereinheit aufweist, über die die Armlehne (08) in einer vertikalen oder horizontalen Schwenkachse gegenüber der Sitzvorrichtung schwenkbar gelagert ist.

14. Strukturbauteil nach Anspruch 13,
**dadurch gekennzeichnet,**
**dass** der Einleger (02) im Bereich der Lagereinheit der Armlehne (08) angeordnet ist.

15. Strukturbauteil nach Anspruch 13 oder 14,
**dadurch gekennzeichnet,**
**dass** die Armlehne (08) eine Bohrung (10) zur Einbringung der Lagereinheit aufweist, wobei der Einleger (02) die Bohrung (10) zumindest teilweise umschließt.
